# EUROPÄISCHE PATENTANMELDUNG

(11) **EP 3 541 149 A1**
(43) Veröffentlichungstag der Anmeldung: **18.09.2019**
(21) Anmeldenummer: 19162837.9
(22) Anmeldetag: 14.03.2019
(51) Int. Cl.: H05B 33/08

(54) **LEUCHTE UND VERFAHREN ZUR ERKENNUNG VON LED-MODULEN**

(30) Priorität: 14.03.2018 DE 102018105929
(71) Anmelder: Siteco Beleuchtungstechnik GmbH, 83301 Traunreut (DE)
(72) Erfinder: Hofinger, Christoph, 83236 Übersee (DE); Rhein, Markus, 83329 Waging (DE)
(74) Vertreter: Schmidt, Steffen

(57) **Zusammenfassung**

Die Erfindung betrifft eine Leuchte mit einem LED-Modul und einem elektrischen Vorschaltgerät, EVG, welches eingerichtet ist, Leuchtdioden, LEDs, im LED-Modul mit Strom zu versorgen, wobei das EVG ferner eingerichtet ist, um eine Vorwärtsspannung des LED-Moduls bei einer definierten Stromstärke zu messen, aus der gemessenen Vorwärtsspannung den Typ des LED-Moduls zu bestimmen und Betriebsparameter zur Stromversorgung des LED-Moduls entsprechend dem bestimmten Typ des LED-Moduls auszuwählen.

## Beschreibung

Die vorliegende Erfindung betrifft eine Leuchte, die ein elektronisches Vorschaltgerät sowie ein separat in der Leuchte vorgesehenes LED-Modul aufweist, sowie ein Betriebsverfahren zum Erkennen des LED-Moduls in der Leuchte.

Eine Leuchte mit Lichtquellen in Form von LEDs (hierunter werden alle Arten von Halbleiterlichtquellen verstanden, einschließlich organischer LEDs) einer neueren Generation werden im Stand der Technik häufig mit austauschbaren LED-Modulen und einem separat von dem LED-Modul eingerichteten elektronischen Vorschaltgerät, EVG, gebildet. Der Vorteil besteht darin, dass sich das LED-Modul unabhängig von dem elektronischen Vorschaltgerät, welches den Versorgungsstrom für das LED-Modul bereitstellt, austauschen lässt.

Um das LED-Modul innerhalb der Leuchte durch das EVG zu betreiben, insbesondere die Lichtstärke entsprechend einer vom Benutzer gewünschten Lichtstärke zu dimmen, ist es notwendig, das EVG auf den Typ des LED-Moduls zu parametrieren, d.h. mit Betriebsparametern zu versehen, welche entsprechend dem Typ des LED-Moduls ausgewählt sind. Dazu kann beispielsweise in dem EVG ein Speicher enthalten sein, der bereits ab Werk mit den entsprechenden Betriebsparametern des LED-Moduls programmiert ist. Bei dem Programmieren "ab Werk" wird das EVG auf den bestimmten LED-Modultyp eingestellt. In diesem Fall ist es jedoch nicht mehr möglich, das LED-Modul durch einen anderen Typ zu ersetzen. LED-Module unterschiedlichen Typs können durchaus die gleichen Abmessungen aufweisen und dieselben elektrischen Anschlüsse aufweisen, so dass sie in der gleichen Leuchte prinzipiell auswechselbar betrieben werden können. Das setzt jedoch voraus, dass das EVG entsprechend dem neuen Typ von LED-Modul neu parametrisiert wird. Dies kann herstellerseitig erfolgen oder möglicherweise sogar kundenseitig vorgenommen werden. Dies setzt jedoch technische Kenntnisse des Servicepersonals voraus. Ferner besteht die Gefahr, dass aus Versehen eine falsche Kombination von Einstellung im EVG und dem Leuchtenmodul ausgewählt werden. Dadurch kann es zu einem zu hohen Versorgungsstrom kommen, was eine Überhitzung des LED-Moduls oder eine Blendung zur Folge haben kann. Auch bei einem zu kleinen Versorgungsstrom kann die Leuchte ihre Beleuchtungsaufgabe nicht richtig erfüllen.

Aufgabe der vorliegenden Erfindung ist es, eine Leuchte, ein EVG bzw. ein Verfahren zum Betreiben einer solchen Leuchte mit einem EVG und einem LED-Modul bereitzustellen, um auf möglichst einfache Weise die richtigen Betriebsparameter für eine Vielzahl von LED-Modulen einzustellen.

Gelöst wird die Aufgabe durch eine Leuchte nach Anspruch 1.

Eine Besonderheit der Leuchte gemäß der vorliegenden Erfindung besteht in dem EVG, welches dazu eingerichtet ist, selbstständig den Typ des LED-Moduls anhand der Vorwärtsspannung zu bestimmen. Unter Vorwärtsspannung versteht man den Spannungsabfall über die Ketten von LEDs, welche in dem LED-Modul vorgesehen sind, gemessen an dem Versorgungseingang des LED-Moduls. Die Vorwärtsspannung ist charakteristisch für den betreffenden Typ des LED-Moduls, da sich die LED-Module insbesondere durch die Anzahl der LEDs innerhalb der Ketten und der Anzahl der parallel geschalteten Ketten unterscheiden. Aus der gemessenen Vorwärtsspannung kann daher auf einen bestimmten Typ eines LED-Moduls geschlossen werden. Zu diesem LED-Modul sind spezifische Betriebsparameter in dem EVG hinterlegt, so dass das EVG sich selbständig auf das angeschlossene LED-Modul parametrieren kann. Im Unterschied zu Systemen aus dem Stand der Technik ist dazu kein Auslesen eines separaten Identifizierungscodes des LED-Moduls notwendig. Daher ist auch kein separater elektronischer Anschluss zwischen dem EVG und dem LED-Modul notwendig. Es genügt, wenn das LED-Modul nur mit den Versorgungsanschlüssen an das EVG in der Leuchte angeschlossen ist.

Gemäß einer bevorzugten Ausführungsform weist das EVG einen Microcontroller auf, welcher eingerichtet ist, die Messung der Vorwärtsspannung bei einem initialen Anschluss des LED-Moduls durchzuführen. Der Microcontroller kann beispielsweise über einen Spannungsteiler an dem Versorgungsausgang des EVG angeschlossen sein. Der Microcontroller ist dafür programmiert, beim erstmaligen Anschluss eines LED-Moduls zunächst einen definierten Strom an das LED-Modul abzugeben und den Spannungsabfall über den Versorgungsanschluss des LED-Moduls zu messen, und die Vorwärtsspannung des betreffenden LED-Moduls zu ermitteln.

Gemäß einer bevorzugten Ausführungsform weist das EVG ferner einen Speicher auf, in welchem für mehrere LED-Module die charakteristische Vorwärtsspannungen zusammen mit den jeweils zugehörigen Betriebsparametern der LED-Module gespeichert sind. Aus diesen Daten lassen sich in der Art einer Tabelle aus der ermittelten Vorwärtsspannung die zugehörigen Betriebsparameter für das betreffende LED-Modul ermitteln. Alternativ könnte auch ein funktioneller Zusammenhang zwischen einer Vorwärtsspannung und zugehörigen Betriebsparametern in dem Speicher gespeichert sein. Das Speichern einer Art Tabelle ist jedoch flexibler für verschiedene Arten von LED-Modulen. Die Anzahl von LED-Modulen, die in der betreffenden Leuchte aufgrund mechanischer Eigenschaften eingesetzt werden können, ist ohnehin beschränkt. Dadurch lassen sich auch mit vergleichsweise geringer Speichergröße alle notwendigen Betriebsparameter der LED-Module in Form einer Tabelle speichern.

Gemäß einer bevorzugten Ausführungsform können die Betriebsparameter eine minimal zulässige Vorwärtsspannung und/oder eine maximal zulässige Vorwärtsspannung umfassen. Die minimal erlaubte Vorwärtsspannung ist notwendig, um einen fehlerfreien Betrieb der LEDs zu gewährleisten. Bei Unterschreiben der minimal erlaubten Vorwärtsspannung kommt es beispielsweise zu Farbverschiebungen in den LEDs. Beim Dimmen der LEDs auf eine niedrigere Lichtstärke darf daher der erlaubte minimale Vorwärtsstrom nicht unterschritten werden. Ein maximal erlaubter Vorwärtsstrom ergibt sich beispielsweise durch die Begrenzung der Erwärmung der LEDs. Beim Überschreiten des maximalen erlaubten Vorwärtsstromes würden die LEDs in dem LED-Modul überhitzen und ggf. ausfallen. Auch ohne ein thermisches Versagen könnte es vorher bereits zu einer Blendung kommen. Das EVG ist gemäß einer bevorzugten Ausführungsform so eingerichtet, dass die Lichtstärke des LED-Moduls zu Dimmen ist, wobei zur Dimmung ein Versorgungsstrom bereitgestellt wird, welcher den maximalen Versorgungsstrom nicht überschreitet und/oder den minimalen Versorgungsstrom nicht unterschreitet, und im Übrigen durch den Benutzer über eine Schnittstelle am EVG einstellbar ist. Unter benutzereinstellbar ist auch zu verstehen, dass ein automatisches Steuersignal, beispielsweise über ein Bussystem, an das EVG abgegeben wird, um die gewünschte Dimmung des LED-Moduls festzulegen. Das EVG wertet diese Steuersignale aus und reduziert bzw. erhöht dementsprechend den Versorgungsstrom, wobei die obere und untere Grenze jedoch nicht überschritten wird. Die Begrenzung des Versorgungstroms nach unten oder oben wird daher nicht durch das Steuersignal selbst, sondern durch das EVG vorgenommen, welches die Steuersignale zur Dimmung nur in einen Versorgungsstrom umsetzt.

Gemäß einer bevorzugten Ausführungsform umfassen die Betriebsparameter u. a. charakteristische Alterungsdaten für die betreffenden LED-Module, insbesondere eine Funktion der Lichtdegradierung der LEDs in dem Modul in Abhängigkeit der Gesamtbetriebszeit der LEDs und/oder des integrierten Gesamtstroms durch die LEDs über deren Gesamtbetriebszeit. LEDs neigen nach längerer Betriebszeit dazu, dass der ausgegebene Lichtstrom bei gegebenem Versorgungsstrom abnimmt. Dieser Effekt kann durch die Gesamtbetriebszeit und/oder durch den integrierten Gesamtstrom durch die LEDs hervorgerufen werden. Um diesen Effekt auszugleichen, werden ältere LED-Module entsprechend mit einem höheren Strom versorgt, so dass die ursprüngliche Helligkeit wieder erreicht wird. Die funktionellen Abhängigkeiten der Lichtdegradierung der LEDs sind im Prinzip bekannt, jedoch für verschiedene Typen von LED-Modulen bzw. Arten von LEDs in den Modulen unterschiedlich. Daher ist es von Vorteil, die spezifischen Alterungsdaten für jedes mögliche LED-Modul, welches in der Leuchte anschließbar ist, zu speichern. In dieser Ausführungsform kann das EVG eine Einrichtung aufweisen, um die Gesamtbetriebszeit des LED-Moduls und/oder den integrierten Versorgungsstrom durch das LED-Modul über die Gesamtbetriebszeit zu speichern. Beispielsweise kann die Betriebszeit ab der initialen Installierung des LED-Moduls aufgezeichnet werden oder der integrierte Strom gespeichert werden. Der Versorgungsstrom wird in dieser Ausführungsform des EVG aufgrund der gespeicherten Alterungsdaten und der gespeicherten aufgezeichneten Gesamtbetriebszeit oder des gespeicherten integrierten Versorgungsstroms eingestellt.

Gemäß einer bevorzugten Ausführungsform ist der definierte Strom zum Messen der Vorwärtsspannung ein Strom zwischen 1 mA bis 1 A. Diese Ströme sind verhältnismäßig niedrig für gängige LED-Module. Dadurch ist bei der initialen Messung des Versorgungsstroms gewährleistet, dass das betreffende LED-Modul nicht thermisch beschädigt wird.

Gemäß einer bevorzugten Ausführungsform weist das EVG an einem Versorgungsausgang für das angeschlossene LED-Modul einen Spannungsteiler auf, um die zu messende Vorwärtsspannung auf ein definiertes Spannungsverhältnis zu teilen, welches in einer integrierten Schaltung des EVG, insbesondere in einem Microcontroller, auswertbar ist. Kleinere Spannungen lassen sich einfacher messen und in einer integrierten Schaltung auswerten. Der Messeingang der integrierten Schaltung ist daher vorzugsweise nicht durch die gesamte Vorwärtsspannung gebildet, sondern nur durch einen definierten Anteil, welcher durch einen Spannungsteiler vorgegebenen ist. Ein Spannungsteiler kann durch zwei in Serie geschaltete Widerstände gebildet werden, wobei die Messspannung über einen der beiden Widerstände abgenommen wird.

Ein weiterer Aspekt der vorliegenden Erfindung betrifft ein EVG für eine Leuchte, welches die vorhergehend genannten Eigenschaften des EVGs in der Leuchte aufweist. Das EVG der Leuchte kann in der Leuchte auch austauschbar sein. Insbesondere ist es auch möglich, eine Leuchte mit unterschiedlichen EVGs, die jeweils für eine Gruppe von LED-Modulen eingerichtet ist, zu bestücken. Die Leuchte kann daher durch Austauschen des EVG für andere Typen von LED-Modulen eingesetzt werden. Ferner ist es von Vorteil, das EVG auch durch ein baugleiches EVG zu ersetzen, falls ein Defekt auftritt. In der Leuchte ist daher vorzugsweise nicht nur das LED-Modul, sondern auch das EVG austauschbar angebracht.

Ein weiterer Aspekt der vorliegenden Erfindung umfasst ein Verfahren zum Betreiben einer Leuchte mit folgenden Schritten:
- Anschließen eines LED-Moduls an ein elektronisches Vorschaltgerät, EVG, in einer Leuchte;
- automatisches Messen einer Vorwärtsspannung des LED-Moduls durch das EVG;
- Identifizieren eines Typs des LED-Moduls durch das EVG;
- Auswählen von Betriebsparametern entsprechend dem detektierten Typ des LED-Moduls in dem EVG; und Versorgen des LED-Moduls mit einem Versorgungsstrom durch das EVG in Abhängigkeit der ausgewählten Betriebsparameter.

Dieses Verfahren ermöglicht, wie zu den vorhergehenden Ausführungsformen der Leuchte beschrieben, die Betriebsparameter für den jeweils angeschlossenen Typ von LED-Modul automatisch zu ermitteln und das LED-Modul innerhalb der Betriebsgrenzen richtig zu betreiben.

Weitere Merkmale und Vorteile der vorliegenden Erfindung werden aus der nachfolgenden detaillierten Beschreibung einer Ausführungsform deutlich, welche in Bezug auf die beigefügte Figur gegeben wird.

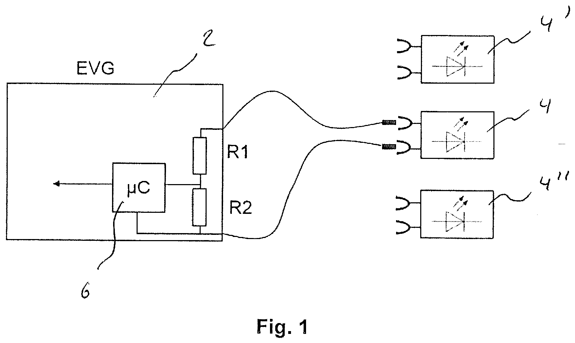

- Figur 1: zeigt einen schematischen Aufbau eines EVG mit einem von drei angeschlossenen LED-Modulen.

Bezug nehmend auf die Figur 1 ist ein EVG im schematischen Aufbau dargestellt. Das EVG 2 ist in einer Leuchte (nicht dargestellt) integriert und wird mittels Versorgungsleitungen mit einem LED-Modul 4 verbunden. Beispielsweise kann das EVG in einem Leuchtengehäuse fest verbaut und mit elektrischen Steckkontakten zu einem auswechselbaren LED-Modul verbunden sein. Die Verbindung muss in dieser Ausführungsform lediglich die Versorgungsspannung für das LED-Modul bereitstellen. Weitere Verbindungen zwischen dem EVG und dem LED-Modul sind nicht notwendig, und in bevorzugten Ausführungsformen der Erfindung auch nicht vorhanden.

Das EVG 2 weist ausgangsseitig einen Spannungsteiler aus zwei Widerständen R1 und R2 auf, die in Serie geschaltet sind. Ferner ist ein Microcontroller 6 an einer Basis des Spannungsteilers und an einem Mittelabgriff des Spannungsteilers angeschlossen, um den Spannungsabfall über den Widerstand R2 zu messen.

Sobald ein LED-Modul 4 erstmalig an dem EVG angeschlossen wird, erkennt der Microcontroller aufgrund des geänderten Eingangswiderstands an dem Spannungsteiler, dass ein neues Modul angeschlossen worden ist. Der Microcontroller initiiert eine Messung der Vorwärtsspannung des LED-Moduls 4. Dazu wird ein definierter Versorgungsstrom an dem LED-Modul 4 angelegt. Der Ausgangsstrom wird von einer Stromquelle im EVG erzeugt, welche in der Figur selbst nicht dargestellt ist. Die Stromquelle wird über den Microcontroller gesteuert. Bei dem anliegenden Strom, welcher lediglich einen Bruchteil, z.B. weniger als 50% oder weniger als 20%, des normalen Versorgungsstroms eines LED-Moduls umfasst, wird ein Spannungsabfall über den LEDs im LED-Modul erzeugt. Dieser Spannungsabfall liegt an dem Spannungsteiler R1 und R2 an. Im Verhältnis von R1 zu R2 liegt eine geringere Messspannung an dem Microcontroller an, die zur Bestimmung der Vorwärtsspannung verwendet wird. Aus der ermittelten Spannung kann auf einen bestimmten Typ eines LED-Moduls geschlossen werden. Es ist zu verstehen, dass die LED-Module 4' und 4" Vorwärtsspannungen bei dem definierten Messstrom hervorbringen, die sich von dem LED-Modul 4 soweit unterscheiden, dass eine Differenzierung zwischen den verschiedenen Typen von LED-Modulen 4, 4', 4" im Microcontroller 6 vorgenommen werden kann. Der Microcontroller 6 ist mit einer Speichereinheit (in der Figur 1 nicht dargestellt) verbunden, in welcher für eine Auswahl von LED-Modulen 4, 4' und 4" Vorwärtsspannungen in einer Tabelle abgelegt sind. In der Tabelle sind ferner die zugehörigen Betriebsdaten für das betreffende Modul gespeichert.

Nach erfolgter initialer Messung der Vorwärtsspannung des LED-Moduls 4 bei der definierten Stromstärke sorgt der Microcontroller 6 dafür, dass die zugehörigen Betriebsparameter für das betreffende LED-Modul aus dem Speicher ausgelesen werden und zur weiteren Steuerung des EVG verwendet werden.

Die Betriebsparameter, auch Parametrierdaten genannt, sind im EVG ab Werk hinterlegt. Sie können ggf. jedoch auch in einem beschreibbaren Speicher ergänzt oder verändert werden.

Die Betriebsparameter umfassen insbesondere:
- eine minimale erlaubte Vorwärtsspannung des LED-Moduls, bei deren Unterschreitung z.B. mit einer Farbverschiebung der LEDs zu rechnen wäre,
- eine maximale erlaubte Vorwärtsspannung des LED-Moduls, bei deren Überschreitung eine Erwärmung des LED-Moduls oberhalb eines zulässigen Bereichs entstehen kann, sowie
- Alterungsdaten der LEDs in dem LED-Modul, worunter insbesondere ein funktionaler Zusammenhang zwischen einer Lichtdegradierung der LED über Strom und Zeit zu verstehen ist.

Im danach folgenden regulären Betrieb der Leuchte wird das EVG angesteuert, um das angeschlossene LED-Modul an- und auszuschalten und auf einen gewünschten Helligkeitswert zu dimmen. Die Steuerungsdaten werden z.B. über einen Datenbus an das EVG übertragen. Die Steuerung im EVG sorgt jedoch dafür, dass diese Steuerdaten entsprechend der ausgewählten Betriebsparameter verwendet werden, um die Dimmung des LED-Moduls vorzunehmen. Insbesondere wird der minimal erlaubte Vorwärtsstrom nicht unterschritten und der maximal erlaubte Vorwärtsstrom nicht überschritten, selbst wenn Steuerbefehle einen höheren Versorgungsstrom oder einen niedrigeren Versorgungsstrom zur Erzielung eines höheren oder geringeren Helligkeitswerts enthalten würden. Ferner wird die altersbedingte Lichtdegradierung der LEDs in dem LED-Modul bei der Dimmung berücksichtigt. Aufgrund eines gespeicherten Zusammenhangs zwischen der Lichtdegradierung der LEDs und deren Gesamtbetriebszeit oder dem integrierten Gesamtstrom durch die LEDs während deren gesamten Betriebszeit wird der Versorgungsstrom zur Erzielung der gewünschten Helligkeit entsprechend erhöht, um die Lichtdegradierung auszugleichen. Dazu weist das EVG einen weiteren Speicher auf, der die Gesamtbetriebszeit des LED-Moduls ggf. mit dem jeweiligen an das LED-Modul angegebenen Stromstärken ab der initialen Installierung des LED-Moduls aufzeichnet. Diese Daten zusammen mit den Alterungsdaten werden dann zur Bestimmung des Vorwärtsstroms durch die LED in der Steuerung des EVGs zur Erzielung der gewünschten Helligkeit verwendet.

Die vorhergehend beschriebene Ausführungsform ist nur als eine schematische Darstellung einer Leuchte der vorliegenden Erfindung zu verstehen. Das EVG kann unterschiedlich aufgebaut sein. Insbesondere kann auch vorgesehen sein, dass mehrere LED-Module an mehreren Versorgungsausgängen des EVG angeschlossen sind. Dann weist das EVG vorzugsweise an jedem der Versorgungsausgänge eine entsprechende Einrichtung zum initialen Messen der Vorwärtsspannung und zum Bestimmen der Betriebsparameter für das betreffende LED-Modul. Zusätzlich kann auch vorgesehen sein, dass das EVG programmierbar ist, um die Betriebsdaten für die möglichen Arten von LED-Modulen zu ändern. Beispielsweise kann bei einer neueren Generation von LED-Modulen lediglich ein EVG in einer vorhandenen Leuchte durch ein Softwareupdate verändert werden, um auch die neuen Typen von LED-Modul zu erkennen.

### BEZUGSZEICHENLISTE

- 2: EVG
- 4: LED-Modul
- 4': LED-Modul
- 4": LED-Modul
- 6: Microcontroller
- R1: Spannungsteiler
- R2: Spannungsteiler

## Patentansprüche

1. Leuchte mit einem LED-Modul und einem elektrischen Vorschaltgerät, EVG (2), welches eingerichtet ist, Leuchtdioden, LEDs, im LED-Modul (4) mit Strom zu versorgen,
**dadurch gekennzeichnet, dass** das EVG (2) ferner eingerichtet ist, um eine Vorwärtsspannung des LED-Moduls (4) bei einer definierten Stromstärke zu messen, aus der gemessenen Vorwärtsspannung den Typ des LED-Moduls (4) zu bestimmen und Betriebsparameter zur Stromversorgung des LED-Moduls (4) entsprechend dem bestimmten Typ des LED-Moduls (4) auszuwählen.

2. Leuchte nach Anspruch 1, wobei das EVG (2) einen Microcontroller (6) aufweist, welcher eingerichtet ist, die Messung der Vorwärtsspannung bei einem initialen Anschluss des LED-Moduls (4) durchzuführen.

3. Leuchte nach einem der vorhergehenden Ansprüche, wobei das EVG (2) einen Speicher aufweist, in welchem für mehrere LED-Module (4, 4', 4") charakteristische Vorwärtsspannungen zusammen mit den jeweils zugehörigen Betriebsparametern der LED-Module (4, 4', 4") gespeichert sind.

4. Leuchte nach einem der vorhergehenden Ansprüche, wobei die Betriebsparameter Folgendes umfassen:
minimal zulässige Vorwärtsspannung und/oder
maximal zulässige Vorwärtsspannung.

5. Leuchte nach Anspruch 4, wobei das EVG (2) eingerichtet ist, die Lichtstärke des LED-Moduls (4) zu dimmen, wobei zur Dimmung ein Versorgungsstrom bereitgestellt wird, welcher den maximalen Versorgungsstrom nicht überschreitet und/oder den minimalen Versorgungsstrom nicht unterschreitet, und im Übrigen durch einen Benutzer über eine Schnittstelle am EVG einstellbar ist.

6. Leuchte nach einem der vorhergehenden Ansprüche, wobei die Betriebsparameter u. a. spezifische Alterungsdaten für das LED-Modul (4) umfassen, insbesondere eine Funktion der Lichtdegradierung der LEDs in dem Modul in Abhängigkeit der Gesamtbetriebszeit der LEDs und/oder des integrierten Gesamtstroms durch die LEDs über deren Gesamtbetriebszeit, umfassen.

7. Leuchte nach Anspruch 6, wobei das EVG (2) ferner eine Einrichtung aufweist, um die Gesamtbetriebszeit des LED-Moduls und/oder den integrierten Versorgungsstrom durch das LED-Modul (4) über die Gesamtbetriebszeit zu speichern und den Versorgungsstrom aufgrund der gespeicherten Abhängigkeit und der gespeicherten Gesamtbetriebszeit oder des gespeicherten integrierten Versorgungsstroms einzustellen.

8. Leuchte nach einem der vorhergehenden Ansprüche, wobei der definierte Strom zum Messen der Vorwärtsspannung ein Strom von 1 mA bis 1 A beträgt.

9. Leuchte nach einem der vorhergehenden Ansprüche, wobei der definierte Strom zum Bestimmen der Vorwärtsspannung 50%, bevorzugt 20%, unter dem maximalen Strom liegt, welche das EVG zum Betreiben des LED-Moduls bereitstellen kann.

10. Leuchte nach einem der vorliegenden Ansprüche, wobei das EVG (2) an einen Versorgungsausgang für das angeschlossene LED-Modul (4) einen Spannungsteiler (R1; R2) aufweist, um die zu messende Vorwärtsspannung auf ein definiertes Spannungsverhältnis zu teilen, welches in einer integrierten Schaltung des EVGs (2) auswertbar ist.

11. Elektronisches Vorschaltgerät, EVG (2), für eine Leuchte nach einem der vorhergehenden Ansprüche, wobei das EVG (2) eingerichtet ist, ein LED-Modul (4) mit Strom zu versorgen, **dadurch gekennzeichnet, dass** das EVG (2) ferner eingerichtet ist, eine Versorgungsspannung des LED-Moduls (4) bei einer definierten Stromstärke zu messen, aus der gemessenen Vorwärtsspannung den Typ des LED-Moduls (4) zu bestimmen und
Betriebsparameter zur Versorgung des LED-Moduls (4) entsprechend dem bestimmten Typ des LED-Moduls (4) auszuwählen.

12. Verfahren zum Initialisieren einer Leuchte, insbesondere einer Leuchte nach einem der Ansprüche 1 bis 10, wobei das Verfahren folgende Schritte umfasst:
Anschließen eines LED-Moduls (4) an ein elektronisches Vorschaltgerät, EVG (2), in einer Leuchte;
automatisches Messen einer Vorwärtsspannung des LED-Moduls (4) durch das EVG (2);
Identifizieren eines Typs des LED-Moduls durch das EVG;
Auswählen von Betriebsparametern entsprechend dem detektierten Typ des LED-Moduls (4) in dem EVG (2); und
Versorgen des LED-Moduls (4) mit einem Versorgungsstrom durch das EVG (2) in Abhängigkeit der ausgewählten Betriebsparameter.
